# EUROPÄISCHE PATENTSCHRIFT

(11) **EP 3 126 874 B1**
(45) Veröffentlichungstag und Bekanntmachung des Hinweises auf die Patenterteilung: **28.03.2018**
(21) Anmeldenummer: 15742181.9
(22) Anmeldetag: 17.07.2015
(51) Int. Cl.: G01S 19/40, G01S 19/45, G01S 19/48, G01S 19/49, G01S 19/03

(54) **VERFAHREN ZUR BESTIMMUNG EINES ORTSAUFGELÖSTEN FEHLERMASSES FÜR EINE POSITIONSBESTIMMUNG MIT EINEM GNSS**
METHOD FOR DETERMINING A SPATIALLY RESOLVED EXTENT OF ERROR FOR POSITION FINDING WITH A GNSS
PROCÉDÉ DE DÉTERMINATION D'UNE ERREUR DE MESURE RÉSOLUE LOCALEMENT POUR DÉTERMINER UNE POSITION AU MOYEN D'UN GNSS

(30) Priorität: 25.07.2014 DE 102014011092
(43) Veröffentlichungstag der Anmeldung: 08.02.2017
(73) Patentinhaber: Audi AG, 85045 Ingolstadt (DE)
(72) Erfinder: BUCHHOLZ, Jan, 84030 Ergolding (DE); ENGEL, Sebastian, 85049 Ingolstadt (DE)
(74) Vertreter: Bauer, Dominik Michael
(86) Internationale Anmeldenummer: PCT/EP2015/001479
(87) Internationale Veröffentlichungsnummer: WO 2016/012089

(56) Entgegenhaltungen:
- DE-A1-102008 020 446
- DE-A1-102010 031 351
- US-A1- 2008 228 395
- US-A1- 2010 007 552
- US-A1- 2010 026 567
- US-A1- 2013 197 800
- JENSEN A B O ET AL: "Availability of GNSS for Road Pricing in Copenhagen", GNSS 2005 - PROCEEDINGS OF THE 18TH INTERNATIONAL TECHNICAL MEETING OF THE SATELLITE DIVISION OF THE INSTITUTE OF NAVIGATION (ION GNSS 2005), THE INSTITUTE OF NAVIGATION, 8551 RIXLEW LANE SUITE 360 MANASSAS, VA 20109, USA, 16. September 2005 (2005-09-16), Seiten 2951-2961, XP056009434,
- WANNER BILL ET AL: "Wide Area Augmentation System Vertical Accuracy Assessment In Support of LPV200 Requirements", NAVIGATION, INSTITUTE OF NAVIGATION, FAIRFAX, VA, US, Bd. 55, Nr. 3, 1. Dezember 2008 (2008-12-01), Seiten 191-203, XP056004555, ISSN: 0028-1522

## Beschreibung

Die Erfindung betrifft ein Verfahren zur Bestimmung eines ortsaufgelösten Fehlermaßes für eine Positionsbestimmung mit einem globalen Navigationssatellitensystem (GNSS) für ein interessierendes Zielgebiet.

Globale Navigationssatellitensysteme sind im Stand der Technik bereits weitgehend bekannt. Ein Beispiel hierfür ist GPS (Global Positioning System). Dabei wird aufgrund der von mehreren Satelliten empfangenen Signale eine aktuelle Position bestimmt, beispielsweise durch ein Mobiltelefon oder ein Kraftfahrzeug.

Gerade in Kraftfahrzeugen existieren immer mehr Fahrzeugsysteme, die eine möglichst exakte Bestimmung der aktuellen Position des Kraftfahrzeugs benötigen. Dies betrifft vor allem Fahrzeugsysteme im Bereich der Kraftfahrzeug-zu-Kraftfahrzeug-Kommunikation (c2c-Kommunikation) und der Kraftfahrzeug-zu-Infrastruktur-Kommunikation (c2x-Kommunikation). Für diese Anwendung ist die von herkömmlichen GNSS-Empfängern (GNSS-Receivern) gelieferte Genauigkeit der GNSS-Position nicht ausreichend, da eine zu große Unsicherheit besteht. Daher wurden im Stand der Technik bereits Methoden vorgeschlagen, um die Positionsgenauigkeit ausgehend von der Verwendung eines GNSS zu verbessern.

DE 10 2008 020 446 A1 betrifft die Korrektur einer Fahrzeugposition mittels markanter Punkte. Dort wird vorgeschlagen, markante Punkte, also Landmarken, zu detektieren, wobei die markanten Punkte in einer Datenbank im Fahrzeug mit zugehörigen exakten GPS-Positionen hinterlegt sind. Mithin ist anhand der Daten in der Datenbank eine Korrektur der Positionsbestimmung möglich.

Allerdings hat dieser Ansatz den Nachteil, dass die exakte Vermessung von Landmarken äußerst aufwendig und kostspielig ist. Ein flächendeckender Einsatz von vermessenen Landmarken zur Verbesserung der Bestimmung der Position über ein GNSS ist daher aktuell nicht realisierbar. Dazu kommt, dass die Genauigkeit der GNSS-Empfänger und somit der durch sie bestimmten GNSS-Positionen stark vom Umfeld abhängig ist, so dass beispielsweise die Genauigkeit auf Autobahnen, wo eine freie Sicht auf die Satelliten existiert, wesentlich größer ist als in Hochhausschluchten, wo die Sichtverbindung zu den Satelliten stark eingeschränkt oder gar nicht direkt möglich ist. Im Beispiel der Hochhausschluchten gelangt das GNSS-Signal, wenn überhaupt, nur durch sogenannte Mehrwegeausbreitung zum Empfänger, was wiederum die erzielbare Genauigkeit massiv verschlechtert. Daher wären Landmarken in solchen Bereichen deutlich sinnvoller als in anderen Bereichen.

Dokument Jensen A B O et al., "Availability of GNSS for Road Procing in Copenhagen", XP056009434, betriff eine Machbarkeitsanalyse, die sich mit der Möglichkeit von GPS-basierten Straßenbenutzungsgebühren in Kopenhagen beschäftigt. Es wird anhand eines Experiments (AKTA-Experiment) und von Simulationen, die sich entsprechen, festgestellt, dass zumindest GPS alleine ungeeignet sein dürfte, um ein derartiges Maut-System umzusetzen. GPS-Daten von 500 Kraftfahrzeugen nahmen auf ungefähr 250.000 Fahrten 120 Millionen GPS-Ereignisse auf. Jede Sekunde wurden die Positionen der Kraftfahrzeuge aufgenommen und gespeichert. Neben der Position sind die horizontale DOP (Dilution of Precision). die Zahl der sichtbaren Satelliten, die Distanz und die Geschwindigkeit abgespeichert worden. Verschiedene Arten von Analysen wurden in einer Datenbank mit der Information durchgeführt. Somit konnten die durchschnittlichen GPS-Daten, insbesondere auch die durchschnittliche HDOP, für jeden Straßenabschnitt ermittelt worden.

Der Erfindung liegt daher die Aufgabe zugrunde, insbesondere zur Vorbereitung einer Erfassung von Landmarken für eine Datenbank zur Verbesserung der Positionsbestimmung in einem Kraftfahrzeug eine leicht umsetzbare, robuste Möglichkeit anzugeben, eine ortsabhängige Genauigkeit des GNSS zu ermitteln.

Zur Lösung dieser Aufgabe ist erfindungsgemäß ein Verfahren zur Bestimmung eines ortsaufgelösten Fehlermaßes für eine Positionsbestimmung mit einem globalen Navigationssatellitensystem für ein interessierendes Zielgebiet unter Verwendung von Felddaten mehrerer jeweils einen Empfänger für das globale Navigationssatellitensystem aufweisender, wenigstens zeitweise in dem Zielgebiet befindlicher Feldvorrichtungen, insbesondere Kraftfahrzeuge, vorgesehen, welches folgende Schritte umfasst:
- Ermitteln wenigstens eines eine aktuelle GNSS-Position in dem Zielgebiet und einen dieser zugeordneten Fehlerwert umfassenden Felddatensatzes seitens der Feldvorrichtungen,
- Übermitteln der Felddatensätze an eine zentrale Recheneinrichtung,
- Ermitteln und Aktualisieren einer die Fehlermaße für verschiedene Positionen und/oder Subgebiete des Zielgebietes enthaltenden Fehlerkarte durch statistische Auswertung der Felddatensätze in der zentralen Recheneinrichtung, wobei im Rahmen der statistischen Auswertung der zeitliche Verlauf der einer Position und/oder einem Subgebiet zuzuordnenden Fehlerwerte berücksichtigt wird und/oder ein zeitlicher Tiefpassfilter auf die einer Position und/ oder einem Subgebiet zuzuordnenden Fehlerwerte angewendet wird.
Erfindungsgemäß wird also vorgeschlagen, ohnehin im Einsatz befindliche, mit einem GNSS-Empfänger ausgestattete Feldvorrichtungen, insbesondere Kraftfahrzeuge, als eine Art Sonden einzusetzen, um Daten darüber zu sammeln, wie genau sich an welchen Positionen bzw. in welchen Subgebieten, in die das Zielgebiet eingeteilt werden kann, Positionsdaten über das GNSS ermitteln lassen. Dabei sind selbstverständlich verschieden Wahlen des Zielgebiets und dessen Aufteilung denkbar, beispielsweise bestimmte Staaten, Abschnitte einer digitalen Karte oder dergleichen. Das Zielgebiet kann beispielsweise durch eine gerasterte Angabe von Positionen aufgeteilt sein, die repräsentativ für denkbare genauere Positionsangaben in deren Umkreis stehen, so dass GNSS-Positionen der Felddatensätze dieser Position zugeordnet werden können; selbstverständlich ist es über eine derartige Rasterung auch möglich, das Zielgebiet in insbesondere gleich große und/oder geformte Subgebiete aufzuteilen, wobei dann überprüft wird, ob die GNSS-Position eines betrachteten Felddatensatzes innerhalb des Subgebiets liegt. Besonders bevorzugt handelt es sich bei den Feldvorrichtungen, wie bereits angedeutet wurde, um Kraftfahrzeuge in ihrem üblichen Betrieb, die heutzutage meist ohnehin einen GNSS-Empfänger, insbesondere einen GPS-Empfänger, aufweisen, der im Rahmen der vorliegenden Erfindung zum Sammeln von Genauigkeitsdaten genutzt werden kann, indem entsprechende Felddatensätze zusammengestellt und an die zentrale Recheneinrichtung übermittelt werden, bevorzugt wenigstens teilweise drahtlos, so dass mithin die Feldvorrichtungen geeignete Kommunikationseinrichtungen aufweisen, im Fall von Kraftfahrzeugen beispielsweise Kraftfahrzeug-zu-Infrastruktur-Kommunikationseinrichtungen und/oder Möglichkeiten zum Aufbau von Kommunikationsverbindungen über das Internet und/oder ein Mobilfunknetz.

Über das hier beschriebene Verfahren lassen sich Gebiete mit kontinuierlich schlechter GNSS-Genauigkeit identifizieren. Für ein definiertes Zielgebiet bzw. konkret entsprechende Subgebiete werden die erhaltenen Fehlerwerte, die in den Felddatensätzen enthalten sind, mittels statistischer Auswertung fusioniert, so dass es ermöglicht wird, festzustellen, ob in einem Subgebiet bzw. an bestimmten Positionen im Zielgebiet konstant schlechte Bedingungen für die erzielbare GNSS-Genauigkeit vorliegen. Die Fehlerkarte kann zweckmäßig mithin genutzt werden, um eine Vermessung von Landmarken an Positionen und/oder in Subgebieten zu priorisieren. Das bedeutet, die Fehlerkarte kann genutzt werden, um anzugeben, in welchen Gebieten Landmarken bevorzugt vermessen werden sollen, die beispielsweise in einem Verfahren, wie es durch die eingangs genannte DE 10 2008 020 446 A1 beschrieben wird, genutzt werden sollen. Durch Umsetzung des erfindungsgemäßen Verfahrens werden zunächst jene Landmarken vermessen und beispielsweise in einer Datenbank abgelegt, in deren Gebiet die GNSS-Genauigkeit beispielsweise durch das Umfeld stark eingeschränkt ist. Dadurch wird die erzielbare GNSS-Genauigkeit in diesen Gebieten stark verbessert, wenn zur Bestimmung der GNSS-Position zusätzlich die Landmarken berücksichtigt werden, was wiederum die Umsetzung von Funktionen in Fahrzeugsystemen eines Kraftfahrzeugs erlaubt, die auf eine flächendeckende, hohe Positionsgenauigkeit angewiesen sind.

In zweckmäßiger Weiterbildung des Verfahrens werden die Felddatensätze nur bei bewegter und/oder in Betrieb befindlicher Feldvorrichtung ermittelt. Bei einer stehenden Feldvorrichtung bzw. einer nicht in Betrieb befindlichen Feldvorrichtung, insbesondere einem Kraftfahrzeug, würden Felddatensätze andauernd von derselben GNSS-Position (oder, falls Schwankungen in der Bestimmung auftreten, von benachbarten GNSS-Positionen desselben Subgebiets) geliefert werden. Dies mag zwar einer statistischen Auswertung unter bestimmten Umständen zuträglich sein, benötigt jedoch Rechen- und Sendeleistung innerhalb der Feldvorrichtung, insbesondere des Kraftfahrzeugs, ohne tatsächlich zur Gesamtabdeckung beizutragen. Mithin wird vorgezogen, Felddatensätze nur dann zu er- und übermitteln, wenn die Feldvorrichtung in Betrieb ist und/oder sich bewegt.

Eine besonders vorteilhafte Ausgestaltung der Erfindung sieht vor, dass als Fehlerwert ein intern im Empfänger bestimmter Fehlerwert, insbesondere eine Dilution of Precision (DOP), verwendet wird. Dabei wurde erkannt, dass viele bekannte GNSS-Empfänger selbst bereits im Rahmen ihrer Funktion Fehlerwerte zur Verfügung stellen. Dann sind mithin keine zusätzlichen Ermittlungen notwendig, sondern es müssen lediglich ohnehin bestimmte Größen zu dem Felddatensatz zusammengefasst und übermittelt werden, was eine besonders aufwandsarme Realisierung des Verfahrens ermöglicht. Die bekannteste Art von Fehlerwert, der von GNSS-Empfängern geliefert wird, sind die sogenannten DOP-Werte (Dilution of. Precision). Darin wird der Effekt der Geometrie der Navigationssatelliten auf die Genauigkeit der GNSS-Position bestimmt. Dabei ist die geometrische DOP beispielsweise definiert als das Verhältnis des Fehlers in der bestimmten GNSS-Position zu dem Fehler in den gemessenen Daten, wobei verschiedene Arten existieren, DOP-Werte zu bestimmen, die im Stand der Technik bereits weitgehend bekannt sind. Mithin enthalten die DOP-Werte eine Information über die Satellitenkonstellation, die einen Einfluss auf die erreichbare GNSS-Genauigkeit hat. Dabei sind beispielsweise die Ungenauigkeit und somit der DOP-Wert größer, wenn die Satelliten nahe beieinander sind bzw. in einer Richtung aufeinanderfolgen.

Besonders bevorzugt ist es auch, wenn als Fehlerwert wenigstens ein im Rahmen einer Koppelnavigation ermittelter Fehlerwert verwendet wird, insbesondere eine Fehlerellipse. Koppelnavigation (englisch "dead reckoning") ist im Stand der Technik bereits bekannt und basiert auf einer fusionierten Positionsbestimmung, in die auch die Eigenbewegung der Feldvorrichtung, insbesondere des Kraftfahrzeugs, eingeht, welche beispielsweise durch mittels einer Inertialsensorik ermittelte Odometriedaten beschrieben werden kann. Die sich hieraus ergebende Eigenbewegungsschätzung wird mit der GNSS-Position fusioniert, wobei es auch hier bekannt ist, im Fusionsprozess fortlaufend Fehlerwerte zu berechnen, die die Abweichung zwischen der GNSS-Position und der Position auf Basis der Eigenbewegungsschätzung angeben. Diese Fehlerwerte können, wie im Stand der Technik grundsätzlich bekannt, zu sogenannten Fehlerellipsen zusammengefasst werden. Auch derartige Fehlerellipsen stellen im Fall einer Koppelnavigation ("dead reckoning") bevorzugt im Felddatensatz enthaltene Fehlerwerte dar.

Eine besonders bevorzugte Ausgestaltung ergibt sich somit, wenn sowohl intern im GNSS-Empfänger bestimmte Fehlerwerte, bevorzugt wenigstens eine DOP, und aus einer Koppelnavigation abgeleitete Fehlerwerte, insbesondere Fehlerellipsen, beide dem Felddatensatz hinzugefügt werden, so dass dieser unterschiedliche Fehlerangaben enthält und die zentrale Recheneinrichtung eine verbesserte statistische Fehleranalyse durchführen kann.

Zweckmäßigerweise kann die Aufzeichnung zur späteren Übersendung und/oder die Übersendung eines Felddatensatzes getriggert ausgelöst werden und/oder zyklisch erfolgen. Nachdem GNSS-Positionen durch GNSS-Empfänger häufiger ermittelt werden, würde ein sehr hohes Datenaufkommen bestehen, insbesondere im Fall von Kraftfahrzeugen, wenn wirklich jeder Messpunkt als Felddatensatz übermittelt werden würden. Von daher können beispielsweise durch Zyklusintervalle definierte Stichproben genommen werden, wobei es jedoch bevorzugt ist, gezielt GNSS-Positionen und zugeordnete Fehlerwerte als Felddatensätze auszuwählen und zu übersenden, wozu ein Relevanzkriterium ausgewertet werden kann. Konkret kann mithin vorgesehen sein, dass die Triggerung aufgrund eines den Fehlerwert auswertenden Relevanzkriteriums erfolgt, insbesondere aufgrund der Überschreitung eines Schwellwerts durch den Fehlerwert. Auf diese Weise wird also letztlich ein Schwellwert für den Fehlerwert bestimmt, im Falle mehrerer Fehlerwerte gegebenenfalls auch mehrere Schwellwerte, der bzw. die beschreiben, bis hin zu welcher Genauigkeit eine Erfassung seitens der zentralen Recheneinrichtung nicht nötig ist. Zielt das erfindungsgemäße Verfahren beispielsweise auf eine Priorisierung der Vermessung von Landmarken ab, können Gebiete, in denen die GNSS-Position ohnehin hinreichend genau ist, in der Vermessung ausgespart werden, um Ermittlungs-, Übertragungs- und Auswertungsaufwand zu vermeiden bzw. gering zu halten. In der Fehlerkarte erscheinen dann die Bereiche hohen Fehlerwertes letztlich als eine Art "Hotspots", die schnell zugeordnet werden können.

Im Rahmen der statistischen Auswertung wird der zeitliche Verlauf der einer Position und/oder einem Subgebiet zuzuordnenden Fehlerwerte berücksichtigt und/oder ein zeitlicher Tiefpassfilter auf die einer Position und/oder einem Subgebiet zuzuordnenden Fehlerwerte angewendet. Indem auch der zeitliche Verlauf berücksichtigt wird, ist es möglich, festzustellen, ob in einem Subgebiet bzw. an einer Position konstant schlechte Bedingungen für die erzielbare GNSS-Genauigkeit vorliegen oder ob gegebenenfalls nur eine temporäre Störung vorliegt, beispielsweise durch Wettereinflüsse und/oder eine temporäre negative Satellitenkonstellation. Die angesprochene Filterung ermöglicht es auch, einzelne Fehlmessungen der Fehlerwerte, mithin Ausreißer, der weiteren Betrachtung möglichst zu entziehen. Dabei können selbstverständlich auch andere grundsätzlich bekannte Verfahren eingesetzt werden, um bei der statistischen Auswertung sogenannte "Ausreißer" aufzufinden und der Betrachtung zu entziehen.

Konkret kann beispielsweise vorgesehen sein, dass für einen beschränkten Zeitraum, insbesondere einen weniger als einen Tag umfassenden Zeitraum, von einem Mittelwert eines sonstigen, längeren Zeitraums außerhalb eines Toleranzintervalls abweichende Fehlerwerte an einer Position und/oder in einem Subgebiet verworfen werden. Dies ermöglicht es, die beschriebenen temporären, seltenen, negativen Effekte auf die GNSS-Genauigkeit, beispielsweise Wetterphänomene, der weiteren Betrachtung zu entziehen und somit insgesamt einen verlässlichen Wert für die tatsächliche GNSS-Genauigkeit an der Position bzw. in dem Subgebiet zu erhalten.

In zweckmäßiger Weiterbildung kann vorgesehen sein, dass als Teil der Felddatensätze auch wenigstens ein den zur Ermittlung der GNSS-Position verwendeten Empfänger kennzeichnendes Empfängerdatum übermittelt wird. Das bedeutet, der Felddatensatz kann auch eine Information darüber enthalten, welche Art bzw. welcher Typ von GNSS-Empfänger verwendet wurde, um die GNSS-Position zu ermitteln. Beispielsweise kann eine Gerätetyp-ID des GNSS-Empfängers als Empfängerdatum hinzugefügt werden, so dass es möglich ist, unterschiedliche Empfänger zu unterscheiden. Dann kann vorgesehen sein, dass eine Klassifizierung der Fehlerwerte anhand des Empfängerdatums erfolgt und einer Klasse zugehörige Fehlerwerte getrennt statistisch ausgewertet werden. Es ist im Rahmen der Erfindung also möglich, eine Art Filterung nach Gerätetyp für die Empfänger vorzunehmen, so dass sich Einflüsse durch unterschiedliche GNSS-Empfänger auf die Genauigkeit analysieren lassen. Beispielsweise kann dann festgestellt werden, ob bestimmte GNSS-Empfänger, die eher selten vorkommen, als einzige in bestimmten Subgebieten und/oder an bestimmten Positionen im Zielgebiet Probleme zeigen und dergleichen, so dass beispielsweise eine Priorisierung noch verfeinert werden kann.

Allgemein gesprochen ist ein System zur Bestimmung eines ortsaufgelösten Fehlermaßes für eine Positionsbestimmung mit einem globalen Navigationssatellitensystem für ein interessierendes Zielgebiet unter Verwendung von Felddaten mehrerer jeweils einen Empfänger für das globale Navigationssatellitensystem aufweisender, wenigstens zeitweise in dem Zielgebiet befindlicher Feldvorrichtungen, insbesondere Kraftfahrzeuge, denkbar, wobei ein Steuergerät der Feldvorrichtungen ausgebildet ist, wenigstens einen eine aktuelle GNSS-Position in dem Zielgebiet und einen diesen zugeordneten Fehlerwert umfassenden Felddatensatz zu ermitteln und an eine zentrale Recheneinrichtung zu übermitteln, wobei die zentrale Recheneinrichtung ausgebildet ist, aus einem Grundstock an Daten zunächst eine die Fehlermaße für verschiedene Positionen und/oder Subgebiete des Zielgebiets enthaltende Fehlerkarte durch statistische Auswertung der Felddatensätze zu ermitteln und aufgrund neuer eintreffender Felddatensätze aktuell zu halten. Das System umfasst mithin Feldvorrichtungen, beispielsweise eine Flotte von Kraftfahrzeugen mit einer entsprechenden Ausbildung, und die zentrale Recheneinrichtung. Die zentrale Recheneinrichtung kann ein einen oder mehrere Computer umfassender Server sein, der über das Internet und/oder ein Mobilfunknetz mit den Feldvorrichtungen, insbesondere den Kraftfahrzeugen, verbunden ist.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein System zur Durchführung des erfindungsgemäßen Verfahrens,
- Fig. 2: eine schematische Darstellung eines Felddatensatzes, und
- Fig. 3: eine Prinzipskizze einer Fehlerkarte.

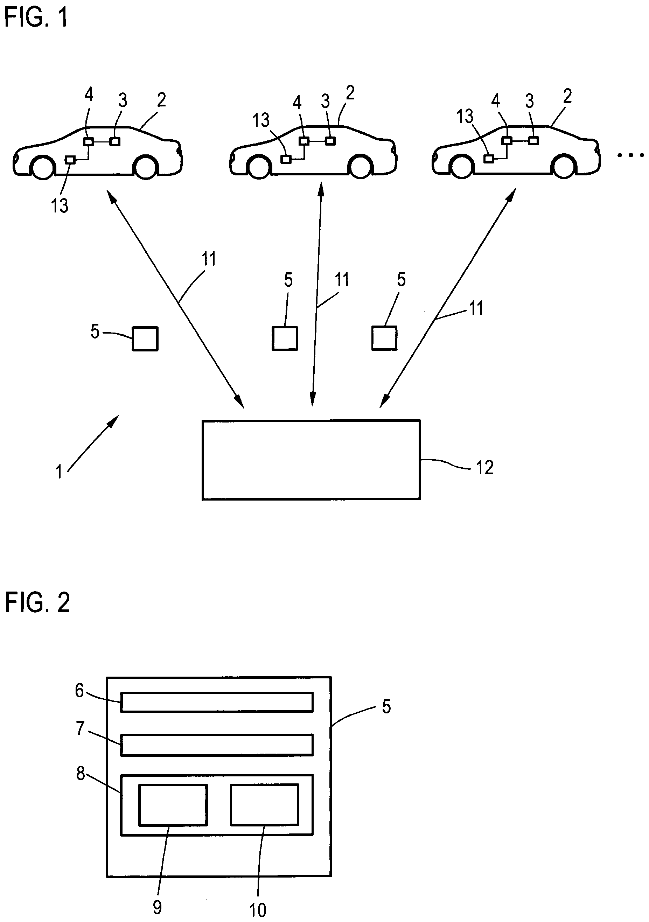

Fig. 1 zeigt eine Prinzipskizze eines Systems 1, in dem das erfindungsgemäße Verfahren durchgeführt werden kann. Dieses umfasst eine Flotte von Kraftfahrzeugen 2, die als Feldvorrichtungen dienen und allesamt einen GNSS-Empfänger 3 für ein globales Navigationssatellitensystem, hier GPS, aufweisen. Die GNSS-Empfänger 3 liefern neben einer aktuellen GNSS-Position, die aus den von verschiedenen Satelliten empfangenen Signalen ermittelt wurde, einen zugeordneten Fehlerwert, nämlich eine Dilution of Precision (DOP). Diese Werte werden an ein Steuergerät 4 des jeweiligen Kraftfahrzeugs weitergegeben, welches zudem auch ein sogenanntes "dead reckoning", also eine Koppelnavigation, durchführt, in der eine Fusion einer aus Daten über die Eigenbewegung des Kraftfahrzeugs 2 gewonnenen Eigenbewegungsschätzung für die aktuelle Position und der GNSS-Position erfolgt, wozu Holometriedaten einer hier nicht näher dargestellten Inertialsensorik des jeweiligen Kraftfahrzeugs 2 genutzt werden. Bei diesen Berechnungen fallen ebenso Fehlerwerte an, die vorliegend in einer Fehlerellipse zusammengefasst werden.

Das Steuergerät 4 ist nun ausgebildet, einen in Fig. 2 schematisch dargestellten Felddatensatz 5 zusammenzustellen, der vorliegend den Typ des GNSS-Empfängers 3 beschreibende Empfängerdaten 6, die aktuelle GNSS-Position 7 und Fehlerwerte 8, die der GNSS-Position 7 zugeordnet sind, enthält. Als Fehlerwerte 8 werden vorliegend die Dilution of Precision 9 sowie die Fehlerellipse 10 verwendet.

Die Ermittlung von Felddatensätzen 5 erfolgt dabei nur, wenn das jeweilige Kraftfahrzeug 2 gerade in Betrieb ist, insbesondere fährt. Dabei muss nicht zu jeder aufgenommenen GNSS-Position ein Felddatensatz 5 erstellt werden, sondern es kann ausreichend sein, dies zyklisch zu tun und/oder nach Auswertung einer Relevanzbedingung, wenn beispielsweise eine vorgegebene Ungenauigkeit eines Schwellwerts für die Fehlerwerte überschritten ist.

Die Felddatensätze 5 werden über eine Kommunikationsverbindung 11 an eine zentrale Recheneinrichtung 12, beispielsweise einen Server, übertragen. Hierzu wird eine Kommunikationseinrichtung 13 der Kraftfahrzeuge 2 entsprechend durch das Steuergerät 4 angesteuert. Die Übertragung erfolgt wenigstens teilweise drahtlos und über ein Mobilfunknetz und das Internet.

Auf der zentralen Recheneinrichtung 12 werden die Felddatensätze 5 gesammelt. Sämtliche Felddatensätze 5 betreffen dabei ein bestimmtes Zielgebiet, das hinsichtlich der Genauigkeit der GNSS-Ermittlung überprüft werden soll, beispielsweise einen bestimmten Staat, wobei die entsprechende Auswahl ebenso in die Entscheidung im Kraftfahrzeug 2 eingehen kann, ob ein Felddatensatz 5 erstellt werden soll. Selbstverständlich ist es auch möglich, nicht das Zielgebiet betreffende Felddatensätze 5 auszusortieren. Zur Erstellung einer Fehlerkarte werden die Felddatensätze 5 gemäß der in ihnen enthaltenen GNSS-Positionen 7 Subgebieten zugeordnet, gleichzeitig werden die Felddatensätze 5 jedoch auch in verschiedene Klassen abhängig von den Empfängerdaten 6 einsortiert, so dass im weiteren Verlauf beispielsweise festgestellt werden kann, ob Genauigkeitsprobleme nur bei bestimmten Empfängern vorliegen oder dergleichen.

Die Daten werden sodann seitens der Recheneinrichtung 12 statistisch ausgewertet, wobei eine getrennte statistische Auswertung für die Daten der unterschiedlichen Klassen erfolgt. Dabei werden die Fehlerwerte verschiedener Kraftfahrzeuge 2 für gleiche Subgebiete fusioniert, so dass ein zusammengefasstes, die allgemeine Genauigkeit in dem Subgebiet angebendes Fehlermaß erhalten wird. Dabei wird auch der zeitliche Verlauf der Fehlerwerte betrachtet, um beispielsweise temporäre, seltene Effekte auszuschließen, beispielsweise schlechte Wetterbedingungen, die nur zeitweise für eine eingeschränkte Genauigkeit sorgen.

Auch hinsichtlich von Ausreißern kann eine Analyse auf die bekannten Arten stattfinden. Dabei sei angemerkt, dass selbstverständlich auch Ausführungsformen denkbar sind, in denen die Auswertung verschiedene Wetterzustände und dergleichen berücksichtigt, wobei die Recheneinrichtung 12 beispielsweise entsprechende Wetterdaten für das Subgebiet aus dem Internet abrufen kann. Ersichtlich kann die Auswertung beliebig genau erfolgen.

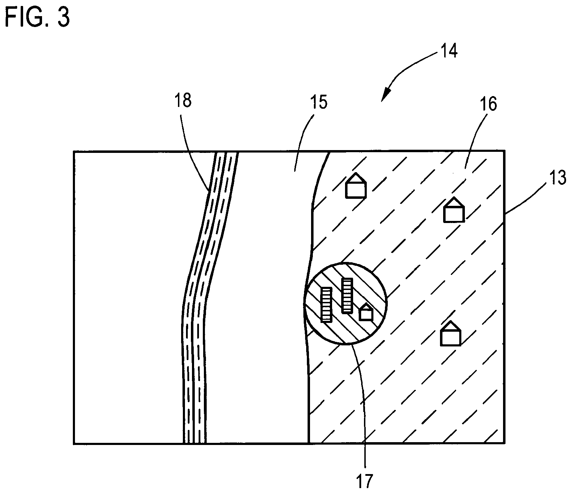

Fig. 3 zeigt beispielhaft und nur prinzipiell illustrierend einen Ausschnitt 13 einer Fehlerkarte 14, wie sie mittels des beschriebenen Verfahrens erhalten werden kann. Dort sind drei Teilgebiete 15, 16, 17 des Zielgebietes zu erkennen, die mit unterschiedlichen Schraffuren hinterlegt sind, mithin Fehlermaße in unterschiedlichen Genauigkeitsbereichen aufweisen. Derartige Teilgebiete 15, 16, 17 sind üblicherweise aus mehreren Subgebieten zusammengesetzt, die beispielsweise definiert werden können, in denen ein Gitter über das Zielgebiet gelegt wird oder dergleichen.

Im Teilgebiet 15 führt eine Autobahn 18 durch offenes Gelände, so dass hier eine hervorragende Genauigkeit gegeben ist. Das Teilgebiet 16 ist leicht bebaut, wodurch die Genauigkeit leicht absinkt. Eine äußerst schlechte Genauigkeit ist im Teilgebiet 17 gegeben, in welchem Hochhäuser zu finden sind, die Satelliten abschirmen und/oder für reflektierte Signale, die empfangen werden, sorgen.

Eine derartige Fehlerkarte 14 kann beispielsweise verwendet werden, um festzulegen, mit welcher Priorität in welchen Subgebieten Landmarken vermessen werden sollen. Derartig vermessene Landmarken mit einer hochgenauen GNSS-Position können in einer Datenbank gespeichert sein und in den Gebieten geringere Genauigkeit von Kraftfahrzeugen 2 abgerufen werden, um die Genauigkeit der dortigen Ortsbestimmung zu verbessern.

## Patentansprüche

1. Verfahren zur Bestimmung eines ortsaufgelösten Fehlermaßes für eine Positionsbestimmung mit einem globalen Navigationssatellitensystem für ein interessierendes Zielgebiet unter Verwendung von Felddaten mehrerer jeweils einen Empfänger (3) für das globale Navigationssatellitensystem aufweisender, wenigstens zeitweise in dem Zielgebiet befindlicher Feldvorrichtungen, insbesondere Kraftfahrzeuge (2), umfassend folgende Schritte:
- Ermitteln wenigstens eines eine aktuelle GNSS-Position (7) in dem Zielgebiet und einen dieser zugeordneten Fehlerwert (8) umfassenden Felddatensatzes (5) seitens der Feldvorrichtungen,
- Übermitteln der Felddatensätze (5) an eine zentrale Recheneinrichtung (12),
- Ermitteln und Aktualisieren einer die Fehlermaße für verschiedene Positionen und/oder Subgebiete des Zielgebietes enthaltenden Fehlerkarte (14) durch statistische Auswertung der Felddatensätze (5) in der zentralen Recheneinrichtung (12),
wobei im Rahmen der statistischen Auswertung der zeitliche Verlauf der einer Position und/oder einem Subgebiet zuzuordnenden Fehlerwerte (8) berücksichtigt wird und/oder ein zeitlicher Tiefpassfilter auf die einer Position und/oder einem Subgebiet zuzuordnenden Fehlerwerte (8) angewendet wird.

2. Verfahren nach Anspruch 1,
**dadurch gekennzeichnet,**
**dass** die Felddatensätze (5) nur bei bewegter und/oder in Betrieb befindlicher Feldvorrichtung ermittelt werden.

3. Verfahren nach Anspruch 1 oder 2,
**dadurch gekennzeichnet,**
**dass** als Fehlerwert (8) ein intern im Empfänger (3) bestimmter Fehlerwert, insbesondere eine Dilution of Precision (9), verwendet wird.

4. Verfahren nach einem der vorangehenden Ansprüche,
**dadurch gekennzeichnet,**
**dass** als Fehlerwert (8) wenigstens ein im Rahmen einer Koppelnavigation ermittelter Fehlerwert verwendet wird, insbesondere eine Fehlerellipse (10).

5. Verfahren nach einem der vorangehenden Ansprüche,
**dadurch gekennzeichnet,**
**dass** die Aufzeichnung zur späteren Übersendung und/oder die Übersendung eines Felddatensatzes (5) getriggert ausgelöst wird und/oder zyklisch erfolgt.

6. Verfahren nach Anspruch 5,
**dadurch gekennzeichnet,**
**dass** die Triggerung aufgrund eines den Fehlerwert (8) auswertenden Relevanzkriteriums, insbesondere der Überschreitung eines Schwellwerts durch den Fehlerwert (8), erfolgt.

7. Verfahren nach einem der vorangehenden Ansprüche,
**dadurch gekennzeichnet,**
**dass** für einen beschränkten Zeitraum, insbesondere einen weniger als einen Tag umfassenden Zeitraum, von einem Mittelwert eines sonstigen, längeren Zeitraums außerhalb eines Toleranzintervalls abweichende Fehlerwerte (8) an einer Position und/oder in einem Subgebiet verworfen werden.

8. Verfahren nach einem der vorangehenden Ansprüche,
**dadurch gekennzeichnet,**
**dass** als Teil der Felddatensätze (5) auch wenigstens ein den zur Ermittlung der GNSS-Position verwendeten Empfänger (3) kennzeichnendes Empfängerdatum (6) übermittelt wird.

9. Verfahren nach Anspruch 8,
**dadurch gekennzeichnet,**
**dass** eine Klassifizierung der Fehlerwerte (8) anhand des Empfängerdatums (6) erfolgt und einer Klasse zugehörige Fehlerwerte (8) getrennt statistisch ausgewertet werden.

10. Verfahren nach einem der vorangehenden Ansprüche,
**dadurch gekennzeichnet,**
**dass** die Fehlerkarte (14) zur Priorisierung einer Vermessung von Landmarken an Positionen und/oder in Subgebieten ausgewertet wird.

## Claims

1. Method for determining a spatially resolved extent of error for a position finding with a global navigation satellite system for a target area of interest using field data from a plurality of field devices, in particular motor vehicles (2), the field devices each having a receiver (3) for the global navigation satellite system and at least intermittently being situated in the target area, the method comprising the following steps:
- determining, by the field devices, at least one field data record (5) comprising a current GNSS position (7) in the target area and an error value (8) associated with the current GNSS position,
- transmitting the field data records (5) to a central computation device (12),
- determining and updating an error map (14) containing the extents of error for various positions and/or subareas of the target area by statistical evaluation of the field data records (5) in the central computation device (12),
wherein the temporal course of error values (8) associated with one position and/or one subarea is taken into consideration by the statistical evaluation, and/or a temporal low-pass filter is applied to the error values (8) associated with one position and/or one subarea.

2. Method according to claim 1,
**characterised in that**
the field data records (5) are determined only when the field device is moving and/or in operation.

3. Method according to claim 1 or 2,
**characterised in that**
an error value determined internally in the receiver (3), in particular a dilution of precision (9), is used as the error value (8).

4. Method according to any of the preceding claims,
**characterised in that**
at least one error value determined by a coupled navigation, in particular an error ellipse (10), is used as the error value (8).

5. Method according to any of the preceding claims,
**characterised in that**
the recording for subsequent transmitting and/or transmitting of a field data record (5) is triggered and/or is performed cyclically.

6. Method according to claim 5,
**characterised in that**
the triggering occurs based on a relevance criterion evaluating the error value (8), in particular exceeding a threshold value by the error value (8).

7. Method according to any of the preceding claims,
**characterised in that**
for a limited time period, in particular a time period of less than one day, error values (8) at one position and/or in a subarea that deviate from a mean value of another longer time period by a tolerance interval are rejected.

8. Method according to any of the preceding claims,
**characterised in that**
at least one receiver datum (6) characterising the receiver (3) used to determine the GNSS position is transmitted as part of the field data records (5).

9. Method according to claim 8,
**characterised in that**
the error values (8) are classified based on the receiver datum (6) and error values (8) belonging to one class are separately statistically evaluated.

10. Method according to any of the preceding claims,
**characterised in that**
the error map (14) is evaluated to prioritise a surveying of landmarks at positions and/or in subareas.

## Revendications

1. Procédé de détermination d'une mesure d'erreur résolue localement pour une détermination de position avec un système global de navigation par satellites pour une région cible d'intérêt en utilisant des données de champ de plusieurs dispositifs de champ présentant respectivement un récepteur (3) pour le système global de navigation par satellites et se trouvant au moins par moments dans la région cible, en particulier des véhicules automobiles (2), comprenant les étapes suivantes consistant à :
- saisir au moins un jeu de données de champ (5) comprenant une position GNSS actuelle (7) dans la région cible et une valeur d'erreur (8) qui lui est affectée de la part des dispositifs de champ,
- transférer les jeux de données de champ (5) à un ordinateur central (12),
- saisir et actualiser une carte d'erreurs (14) contenant les mesures d'erreurs pour diverses positions et/ou sous-régions de la région cible par évaluation statistique des jeux de données de champ (5) dans l'ordinateur central (12),
dans lequel, dans le cadre de l'évaluation statistique, on tient compte du déroulement temporel des valeurs d'erreurs (8) à affecter à une position et/ou une sous-région et/ou on applique un filtre passe-bas provisoire aux valeurs d'erreurs (8) à affecter à une position et/ou une sous-région.

2. Procédé selon la revendication 1,
**caractérisé en ce que**,
les jeux de données de champ (5) ne sont saisies que dans le dispositif de champ déplacé et/ou qui est en service.

3. Procédé selon la revendication 1 ou 2,
**caractérisé en ce que**,
on utilise comme valeur d'erreur (8) une valeur d'erreur déterminée de manière interne dans le récepteur (3), en particulier une dilution de précision (9).

4. Procédé selon l'une quelconque des revendications précédentes,
**caractérisé en ce que**,
on utilise comme valeur d'erreur (8) au moins une valeur d'erreur saisie dans le cadre d'une navigation à l'estime, en particulier une ellipse d'erreur (10).

5. Procédé selon l'une quelconque des revendications précédentes,
**caractérisé en ce que**,
l'enregistrement pour le transfert ultérieur et/ou le transfert d'un jeu de données de champ (5) est résolu par déclenchement et/ou se fait de façon cyclique.

6. Procédé selon la revendication 5,
**caractérisé en ce que**,
le déclenchement se fait sur la base d'un critère de pertinence évaluant la valeur d'erreur (8), en particulier le dépassement d'une valeur de seuil par la valeur d'erreur (8).

7. Procédé selon l'une quelconque des revendications précédentes,
**caractérisé en ce que**,
pour un intervalle de temps limité, en particulier un intervalle de temps comprenant moins d'un jour, on rejette les valeurs d'erreurs (8) s'écartant d'une valeur moyenne d'un intervalle de temps usuel plus long en dehors d'un intervalle de tolérance dans une position et/ou dans une sous-région.

8. Procédé selon l'une quelconque des revendications précédentes,
**caractérisé en ce que**,
on transfère comme partie des jeux de données de champ (5) également au moins une date de réception (6) caractérisant le récepteur (3) utilisé pour la saisie de la position GNSS.

9. Procédé selon la revendication 8,
**caractérisé en ce que**,
une classification des valeurs d'erreurs (8) se fait sur la base de la date de réception (6) et les valeurs d'erreurs (8) appartenant à une classe sont évaluées séparément par voie statistique.

10. Procédé selon l'une quelconque des revendications précédentes,
**caractérisé en ce que**,
la carte d'erreurs (14) est évaluée pour donner la priorité à une mesure de points de repère dans des positions et/ou des sous-régions.
